# EUROPÄISCHE PATENTANMELDUNG

(11) **EP 4 194 650 A1**
(43) Veröffentlichungstag der Anmeldung: **14.06.2023**
(21) Anmeldenummer: 22212834.0
(22) Anmeldetag: 12.12.2022
(51) Int. Cl.: E05B 63/00, B64C 1/14, E05B 65/00, E05B 83/44, B60R 15/00

(54) **FREIZEITFAHRZEUG MIT EINER TÜR, DIE INSBESONDERE FÜR EINEN INNENAUSBAU DIENT**

(30) Priorität: 11.12.2021 DE 102021132766
(71) Anmelder: Hymer GmbH & Co. KG, 88339 Bad Waldsee (DE)
(72) Erfinder: Steigmiller, Anton, 88444 Ummendorf (DE)
(74) Vertreter: Waller, Stefan

(57) **Zusammenfassung**

Tür (2) für ein Freizeitfahrzeug (1), insbesondere ein Wohnmobil oder ein Wohnwagen, mit einem axial gelagerten Türblatt (4), das an einer Verschlussebene (5) an ein Türstockelement (6) anlegbar ist. Vorgeschlagen wird, dass an dem Türstockelement (6) ein Hakenriegelschloss (7) vorgesehen ist. Ferner ist ein Freizeitfahrzeug (1) mit solch einer Tür (2) angegeben.

## Beschreibung

Die Erfindung betrifft ein Freizeitfahrzeug mit einer Tür, insbesondere ein Wohnmobil oder einen Wohnwagen, wobei die Tür ein axial gelagertes Türblatt aufweist, das an einer Verschlussebene an ein Türstockelement anlegbar ist.

Aus der DE 295 03 469 U1 ist eine kompakte Nasszelle für ein Wohnmobil bekannt. Die Nasszelle hat im Wesentlichen einen rechteckförmigen Grundriss, wobei im Bereich einer Ecke dieses Rechtecks die Ecke abgeschrägt ist und dort eine Tür angeordnet ist, die nach außen aufschlägt.

Bei einer Tür für ein Freizeitfahrzeug, insbesondere ein Wohnmobil, ergeben sich besondere Anforderungen. Speziell ist eine Sicherung während einer Fahrt erforderlich. Eine Sicherung kann über ein Gurtband erfolgen. Dies ist jedoch weder funktional noch ästhetisch. Denkbar ist es auch, dass zur Sicherung ein Schubstangenschloss zum Einsatz kommt. Dies ist aber für einen Benutzer nicht sicher bedienbar.

Der vorliegenden Erfindung liegt die Aufgabe zugrunde, eine Tür für ein Freizeitfahrzeug und ein Freizeitfahrzeug mit einer Tür anzugeben, die in verbesserter Weise ausgestaltet sind.

Diese Aufgabe wird durch eine Tür mit den Merkmalen des unabhängigen Patentanspruchs 1 und durch ein Freizeitfahrzeug mit den Merkmalen des Patentanspruchs 8 gelöst. Vorteilhafte Weiterbildungen der Erfindung sind in den Unteransprüchen angegeben.

Die Aufgabe wird erfindungsgemäß durch eine Tür für ein Freizeitfahrzeug, insbesondere ein Wohnmobil oder einen Wohnwagen, mit einem axial gelagerten Türblatt, das an einer Verschlussebene an ein Türstockelement anlegbar ist, gelöst, wobei an dem Türstockelement ein Hakenriegelschloss vorgesehen ist.

Ferner wird die Aufgabe durch ein Freizeitfahrzeug, insbesondere ein Wohnmobil oder einen Wohnwagen, mit zumindest solch einer Tür gelöst.

Vorteilhaft ist es, dass das Türstockelement zumindest teilweise an einer feststehenden Wand vorgesehen ist. Hierbei ist es ferner vorteilhaft, dass die feststehende Wand zumindest teilweise eine Seitenwand einer Sanitärzelle bildet. Die feststehende Wand kann auch für andere Zwecke dienen. Entsprechend kann auch die Tür für andere Anwendungsfälle als eine Sanitärzelle dienen.

Das Hakenriegelschloss ist vorzugsweise so ausgebildet, dass beim Zudrücken des Türblatts an der Verschlussebene gegen das Türstockelement die Tür verriegelt und für eine Fahrt gesichert ist. Eine Fehlbedienung durch den Benutzer kann dadurch zumindest weitgehend ausgeschlossen werden. Ferner ist es vorteilhaft, dass eine Rosette einer WC-Garnitur vorgesehen ist, durch die das Hakenriegelschloss betätigbar ist. Hierdurch kann in vorteilhafter Weise ein ästhetisch ansprechendes Betätigungselement gewählt und eingebaut werden. Ferner lassen sich hierdurch auch Herstellungskosten reduzieren. Außerdem kann ein Betätigungselement genutzt werden, mit dem die Benutzer in der Regel bereits vertraut sind.

Außerdem ist es vorteilhaft, dass ein mit dem Türblatt verbundener Türgriff vorgesehen ist. Hierdurch ist eine intuitive Bedienung möglich. Insbesondere ist es für den Benutzer hierdurch klar, dass das Öffnen der Tür über den Türgriff ermöglicht ist, wenn das Hakenriegelschloss das Türblatt freigibt.

Besonders bevorzugt dient die Tür für einen Innenausbau des Freizeitfahrzeugs.

Somit kann im Unterschied zu einer herkömmlichen Ausgestaltung eine Tür realisiert werden, die bereits durch Zudrücken verriegelt. Somit muss die Tür nicht durch einen weiteren Handgriff fixiert und für die Fahrt gesichert werden. Hierdurch wird eine Fehlbedienung durch den Benutzer vermieden. Insbesondere wird hierdurch verhindert, dass ein Benutzer mit ungesicherter Tür losfährt.

Ein Hakenriegelschloss, das in der Regel zum Verschließen einer Schiebetür gedacht ist, kann somit in vorteilhafter Weise für ein Tür mit einem axial gelagerten Türblatt genutzt werden. Hierbei ist das Hakenriegelschloss bei der vorgeschlagenen Ausgestaltung im Unterschied zu einer herkömmlichen Schiebetür nicht in der Tür, sondern in dem Türstockelement verbaut.

Somit kann in vorteilhafter Weise eine Sicherung der Tür mit einem Gurtband, das aus Textil, Kunststoff, Leder oder dergleichen hergestellt sein kann, mit einem Druckknopf oder ähnlichem entfallen. Auch ein Schubstangenschloss ist somit nicht erforderlich.

Weitere Vorteile und Einzelheiten der Erfindung werden anhand der in den schematischen Figuren dargestellten Ausführungsbeispielen näher erläutert. Hierbei zeigen:
- Fig. 1: Ein Freizeitfahrzeug mit einer Tür einer Sanitärzelle entsprechend einem Ausführungsbeispiel der Erfindung in einer auszugsweisen, schematischen Darstellung und
- Fig. 2: den in Fig. 1 mit II bezeichneten Ausschnitt im Detail.

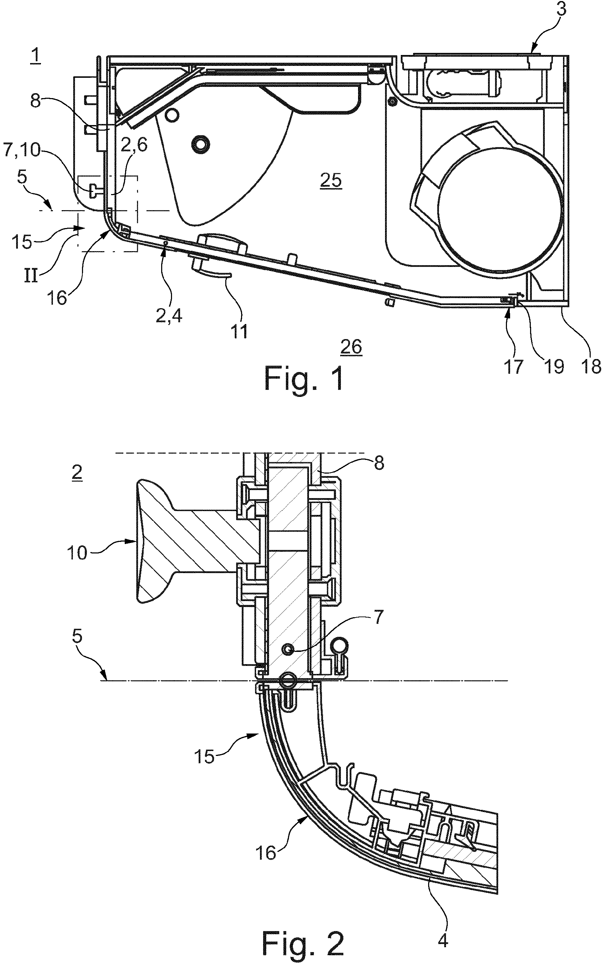

Fig. 1 zeigt ein Freizeitfahrzeug 1 mit einer Tür 2 einer Sanitärzelle 3 entsprechend einem Ausführungsbeispiel in einer auszugsweisen, schematischen Darstellung. Das Freizeitfahrzeug 1 kann insbesondere als Wohnmobil oder Wohnwagen ausgebildet sein. Bei einer abgewandelten Ausgestaltung kann die Tür 2 auch auf andere Weise genutzt werden, beispielsweise als Schranktür.

Die Tür 2 weist ein axial gelagertes Türblatt 4 auf, das an einer Verschlussebene 5 an ein Türstockelement 6 der Tür 2 anlegbar ist. An dem Türstockelement 6 ist ein Hakenriegelschloss 7 vorgesehen.

Die Ausgestaltung der Tür 2 ist im Folgenden auch unter Bezugnahme auf Fig. 2 weiter beschrieben.

Fig. 2 zeigt den in Fig. 1 mit II bezeichneten Ausschnitt der Tür 2 der Sanitärzelle 3 entsprechend dem Ausführungsbeispiel im weiteren Detail. Das Hakenriegelschloss 7 ist so ausgestaltet, dass beim Zudrücken des Türblatts 4 an der Verschlussebene 5 gegen das Türstockelement 6 die Tür 2 verriegelt. Somit ist eine Sicherung bei einer möglichen Fahrt gewährleistet.

In diesem Ausführungsbeispiel ist das Türstockelement 6 an einer feststehenden Wand 8 der Sanitärzelle 3 vorgesehen. Die Wand 8 bildet hierbei die Seitenwand 8 der Sanitärzelle 3. Ferner weist das Hakenriegelschloss 7 eine Rosette 10 auf. Die Rosette 10 dient zur Betätigung des Hakenriegelschlosses 7. Hierbei kann die Rosette 10 als Rosette 10 einer WC-Garnitur gewählt sein. Somit kann das Hakenriegelschloss 7 in vorteilhafter Weise in die feststehende Wand 8 integriert werden. Die Tür 2 wird dann durch Zudrücken fest verriegelt. Speziell kann die Tür 2 durch Zudrücken in einem Handgriff verriegelt und für die Fahrt gesichert werden. Dadurch ist ein Losfahren mit ungesicherter Tür 2 nahezu ausgeschlossen. Ferner kann ein ästhetisch ansprechendes Design realisiert werden.

Außerdem weist die Tür 2 einen an dem Türblatt 4 angebrachten Türgriff 11 auf. Hierdurch wird eine intuitive Benutzung ermöglicht.

Das Hakenriegelschloss 7 greift mit einem Haken (nicht dargestellt) in ein entsprechendes Teil des Türblattes 4 ein. Dieses Einrasten ist für einen Benutzer intuitiv nachvollziehbar. Da das Hakenriegelschloss 7 in der feststehenden Wand 8 montiert ist, ergeben sich zumindest keine wesentlichen Einschränkungen hinsichtlich der Dimensionierung. Andererseits kann das Türblatt 4 insbesondere in einen Bereich 15 an der Verschlussebene 5 zumindest weitgehend beliebig ausgeformt sein, da das Gegenstück zum Einrasten des Hakens des Hakenriegelschlosses 7 nur einen geringen Bauraum einnimmt. Somit ist insbesondere eine stark gebogene Geometrie 16 des Türblatts 4 bereits in dem Bereich 15 möglich. Somit kann das Hakenriegelschloss 7 genutzt werden, obwohl es in der Tür 2 gegebenenfalls keinen Platz hätte.

Somit kann insbesondere eine Tür 2 mit einem Hakenriegelschloss 7 in Verbindung mit der Rosette 10 einer WC-Drückergarnitur zur sicheren Fixierung der axial gelagerten Tür 2 realisiert werden. In diesem Ausführungsbeispiel ist die Tür 2 beispielsweise über ein Scharnier 17 mit einer weiteren feststehenden Wand 18 der Sanitärzelle 3 verbunden. Hierdurch ist eine Rotationsachse 19 für die axiale Lagerung des Türblatts 4 realisiert. Die Tür 2 dient in diesem Ausführungsbeispiel zum Abtrennen eines Sanitärbereichs 25 von einem Wohnbereich 26 des Freizeitfahrzeugs 1. In entsprechender Weise können auch andere Bereiche im Freizeitfahrzeug 1 abgetrennt werden.

Die Erfindung ist nicht auf die beschriebenen Ausführungsformen beschränkt.

## Patentansprüche

1. Tür (2) für ein Freizeitfahrzeug (1), insbesondere ein Wohnmobil oder einen Wohnwagen mit einem axial gelagerten Türblatt (4), das an einer Verschlussebene (5) an ein Türstockelement (6) anlegbar ist,
**dadurch gekennzeichnet,**
**dass** an dem Türstockelement (6) ein Hakenriegelschloss (7) vorgesehen ist.

2. Tür nach Anspruch 1,
**dadurch gekennzeichnet,**
**dass** das Türstockelement (6) zumindest teilweise an einer feststehenden Wand (8) vorgesehen ist.

3. Tür nach Anspruch 2,
**dadurch gekennzeichnet,**
**dass** die feststehende Wand (8) zumindest teilweise eine Seitenwand (8) einer Sanitärzelle (3) bildet.

4. Tür nach einem der Ansprüche 1 bis 3,
**dadurch gekennzeichnet,**
**dass** das Hakenriegelschloss (7) so ausgebildet ist, dass beim Zudrücken des Türblatts (4) an der Verschlussebene (5) gegen das Türstockelement (6) die Tür (2) verriegelt und für eine Fahrt gesichert ist.

5. Tür nach einem der Ansprüche 1 bis 4,
**dadurch gekennzeichnet,**
**dass** eine Rosette (10) einer WC-Garnitur vorgesehen ist, durch die das Hakenriegelschloss (7) betätigbar ist.

6. Tür nach einem der Ansprüche 1 bis 5,
**dadurch gekennzeichnet,**
**dass** ein mit dem Türblatt (4) verbundener Türgriff (11) vorgesehen ist.

7. Tür nach einem der Ansprüche 1 bis 6,
**dadurch gekennzeichnet,**
**dass** die Tür (2) für einen Innenausbau des Freizeitfahrzeugs (1) dient.

8. Freizeitfahrzeug (1), insbesondere Wohnmobil oder Wohnwagen, mit zumindest einer Tür (2) nach einem der Ansprüche 1 bis 7.
